# EUROPEAN PATENT APPLICATION

(11) **EP 0 852 167 A1**
(43) Date of publication of application: **08.07.1998**
(21) Application number: 97310504.2
(22) Date of filing: 23.12.1997
(51) Int. Cl.: B23B 27/14, C04B 41/87

(54) **Coated cubic boron nitride polycrystalline superabrasive tools**

(30) Priority: 07.01.1997 US 779417
(71) Applicant: GENERAL ELECTRIC COMPANY, Schenectady, NY 12345 (US)
(72) Inventor: Jackson, William Edwin, Dublin, Ohio 43017 (US); Lucek, John W., Powell, Ohio 43065 (US)
(74) Representative: Szary, Anne Catherine, Dr.

(57) **Abstract**

Disclosed is a polycrystalline cubic boron nitride (CBN) cutting tool containing less than 70 volume-% CBN and being coated with a layer of hard refractory material. Appropriate hard refractory coating materials need to possess characteristics which include that such material:
(a) forms a stable chemical bond (*e.g.*, a nitride or boride) with CBN,
(b) is inert to ferrous metals,
(c) will not promote back-conversion of CBN, and
(d) will form a continuous coating on CBN under conditions which are not detrimental to CBN.
Materials that exhibit such characteristics broadly include, for example, a boride, carbide, nitride, or silicide of a transition metal. Representative of such materials are, for example, the borides of Ti, Zr, V, Ta, Cr; the carbides of Zr, V; the nitrides of Cr, Ta, Si, Al; and the silicides of Mo.

## Description

The present invention relates to cutting, milling, and turning tools and more particularly to improving the performance of cubic boron nitride (CBN) superabrasive tools for material removal operations.

The manufacture of CBN by the high pressure/high temperature (HP/HT) process is known in the art and is typified by the process described in U.S. Pat. No. 2,947,617, a basic monocrystalline CBN case. U.S. Pat. No. 4,188,194 describes a process for making sintered polycrystalline CBN compacts which utilizes pyrolytic hexagonal boron nitride (PBN) in the absence of any catalyst. An improvement on such direct conversion process is disclosed in U.S. Pat. No. 4,289,503 wherein boric oxide is removed from the surface of the HBN powder before the conversion process.

A compact is a mass of abrasive particles bonded together in a self-bonded relationship (see U.S. Pat. Nos. 3,852,078 and 3,876,751); by means of a bonding medium (U.S. Pat. Nos. 3,136,615, 3,233,988, 3,743,489, 3,767,371, and 3,918,931); or by means of combinations thereof. A composite compact is a compact bonded to a substrate material, such as cemented metal carbide. U.S. Pat. No. 3,918,219 teaches the catalytic conversion of hexagonal boron nitride (HBN) to CBN in contact with a carbide mass to form a composite CBN compact. Compacts or composite compacts may be used in blanks for tools, drill bits, dressing tools, and wear parts (see U.S. Pat. Nos. 3,136,615 and 3,233,988).

Polycrystalline CBN compacts often are used in machining hard ferrous alloy workpieces. Tool hardness and mechanical properties must be balanced against tool reactivity. High CBN content compacts provide the highest hardness, but, generally, are reactive towards alloy steels. To provide utility, non-reactive phases often are added to protect the CBN from reacting with ferrous alloys. While improvements have been realized by this approach, an optimized product is required for each chemical class of alloy materials to be machined. Increased development costs and product line support costs add to the cost of such optimized CBN machining products. A more universal solution is needed.

### Brief Summary of the Invention

Disclosed is a polycrystalline cubic boron nitride (CBN) cutting tool containing less than 70 volume-% CBN and being coated with a layer of hard refractory material. Appropriate hard refractory coating materials need to possess characteristics which include that such material:
(a) forms a stable chemical bond (*e.g*., a nitride or boride) with CBN,
(b) is inert to ferrous metals,
(c) will not promote back-conversion of CBN, and
(d) will form a continuous coating on CBN under conditions which are not detrimental to CBN.

Advantages of the present invention include the ability to extend the useful life of CBN cutting tools by providing the rigidity and bulk hardness of CBN but the chemical inertness of a ceramic at the tool/workpiece interface. Another advantage is that the inventive CBN cutting tools show such improvement regardless of the type of ferrous alloy being machined. Yet another advantage is that application of the coatings to the CBN cutting tools is a relatively simple commercial operation. These and other advantages will become readily apparent to those skilled in the art based upon the instant disclosure.

### Brief Description of the Drawings

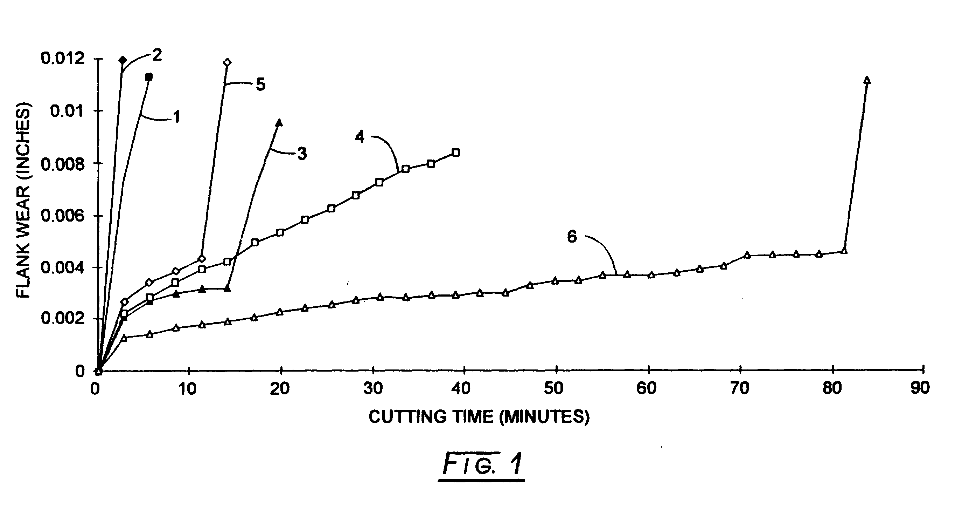

Figs. 1-4 depict graphically the test results reported in Tables I-IV of Examples I -IV, respectively. They will be described in detail below.

### Detailed Description of the Invention

While coating CBN compacts rich in CBN as proposed in EP 102,843 would seem to hold promise in possibly improving the cutting performance of such compacts, such products have yet to enter the marketplace. During work on the present invention, modest cutting performance improvement of coated high CBN-containing compacts was confirmed. It was unexpectedly discovered, however, that CBN compacts with less than 70 volume-% CBN content showed dramatic improvement in such machining operations, notably a longer useful life. Moreover, the tool lives of coated low CBN compacts were several times as long as the best coated high CBN compacts tested. Such improvement in machining performance is seen for CBN compacts that contain greater than 30 volume-% second phase, typically a ceramic material like TiN or TiC as is conventional in this art field. Nevertheless, for CBN compacts of diminished CBN content, unexpected machining performance is seen when coating the compacts with a thin, but effective, layer of a refractory coating that exhibits certain characteristics as set forth below:
(a) forms a stable chemical bond (*e.g*., a nitride or boride) with CBN,
(b) is inert to ferrous metals,
(c) will not promote back-conversion of CBN, and
(d) will form a continuous coating on CBN under conditions which are not detrimental to CBN.

Materials that exhibit such characteristics broadly include, for example, a boride, carbide, nitride, or silicide of a transition metal. Representative of such materials are, for example, the borides of Ti, Zr, V, Ta, Cr; the carbides of Zr, Ti, V; the nitrides of Cr, Ta, Ti, Si, Al; and the silicides of Mo. Of these materials, TiN has proven quite efficacious while TiC, unexpectedly, has proven of less value for the samples tested, as the examples will demonstrate.

Refractory coatings can be applied by a variety of conventional techniques including, for example, chemical vapor deposition, plasma activated vapor deposition, sputtering techniques, and vacuum plating. Such techniques are well known in the art and little more need stated about them.

Coating thickness' should be effective in extending the use life of the CBN compact. Broadly, the performance of the coated compacts should be at least about as good as a high (e.g., >70% CBN content) CBN compact and typically the performance of the inventive coated CBN compacts should exceed the performance of high CBN compacts for certain workpieces. This performance enhancement typically translates into a coating thickness of at least about 0.25 microns. Broadly, the coating thickness will range from between about 0.25 and 30 microns, and advantageously it will range from between about 1 and 12 microns in thickness. The coating thickness can be varied depending upon a variety of convention factors including, for example, type of workpiece being cut, cutting conditions (*e.g.*, wet or dry, infeed rate, depth of cut, *etc.*), and like factors.

At least the portion of the CBN compact surface in contact with the workpiece being machined should be coated and preferably substantially all of the exterior surfaces of the CBN compact should be coated. Uncoated and unevenly coated surface areas of the CBN compact will only contribute to a diminishment in its performance compared to a completely coated CBN compact; yet, even such incompletely coated CBN compacts are expected to out-perform a comparable uncoated CBN compact. Most conventional coating techniques, such as those listed above, yield a completely coated CBN product if practiced properly.

The second phase in the CBN compacts makes up greater than 30 volume-% of the compact. Such CBN compacts are commercially available and conventionally made. With respect to the ceramic (which includes cermet for present purposes) phase in the CBN compacts, such ceramics are taught in the art to be a carbide, nitride, carbonitride, boride, or silicide, of a variety of metals including, for example, aluminum, titanium, silicon, chromium, hafnium, zirconium, tantalum, molybdenum, niobium, vanadium, and tungsten. If a cermet is used, the metal for bonding the ceramic can include metals such as, for example, nickel, cobalt, chromium, manganese, iron, molybdenum, tungsten, vanadium, aluminum, magnesium, silicon, titanium, zirconium, hafnium, and the like and mixtures thereof. Again, such CBN compacts are well known in the art.

The coated CBN compacts disclosed herein have been used commercially in the high speed machining of hardened steels (>45 Rc). Traditionally, workpieces machined have included pinion gears, side gears, transmission shafts, axle shafts and bearings, where both continuous and interrupted cuts are seen. The inventive coated CBN compacts also will find use for such conventional workpiece machining. Unexpectedly, however, the novel coated CBN compacts also displayed efficacy in machining soft steels and nodular iron, which workpieces are not traditionally machined with CBN compacts. Thus, the present invention now will enable a variety of non-traditional workpieces to be machined with CBN compacts, as the examples will demonstrate.

While the invention has been described and illustrated in connection with certain preferred embodiments thereof, it will be apparent to those skilled in the art that the invention is not limited thereto. Accordingly, it is intended that the appended claims cover all modifications which are within the spirit and scope of this invention. All references cited herein are expressly incorporated herein by reference.

### IN THE EXAMPLES

In the examples, SNG-433 CBN tool inserts with a 15° x 0.008 inch chamfer (tool insert was finished ground and chamfered before coating) were tested in accordance with testing guidelines as outlined in ANSI/ASME B94.55M (ISO 3685), "Tool Life Testing With Single-Point Tools" on various heat-treated bar stock. Samples of the CBN tool inserts were CVD (chemical vapor deposition) coated with 6 µm nominal thick coatings of various materials for testing. In the tabulated data that follows, some of the times set forth in the tables have been rounded off to simplify presentation of the data. That is, some of the times recorded for different samples in the tables actually may vary by up to around one-tenth of a minute for different samples. Presenting the flank wear for different samples as having been recorded at the same time simplifies the data presentation without any significant affect on the results actually recorded.

### EXAMPLE I

In this example, AISI-SAE grade 4340 steel (American Iron and Steel Institute-Society of Automotive Engineers) was subjected to testing under the following conditions: 400 SFM cutting speed, 0.005 IPR feed (inches per revolution), 0.010 inches DOC (depth of cut), dry cutting (no lubrication fluid). The CBN tool inserts used contained about 90 volume-% CBN content (Samples 1-3) or 65 volume-% CBN content (Samples 4-6) (balance being essentially TiN). The tool inserts were tested as is, with TiC coating, or with TiN coating. Flank wear was the chosen criterion monitored. Flank (or tool) wear represents loss of material from the tool which shortens tool life and often results in degradation to the surface of the workpiece being machined. The results obtained are set forth below in Table I.

**TABLE I**

| **TYPE 4340 STEEL** **FLANK WEAR (IN)** | | | | | | |
|---|---|---|---|---|---|---|
| Time (min) | Sample 1 No Coating | Sample 2 TiC Coating | Sample 3 TiN Coating | Sample 4 No Coating | Sample 5 TiC Coating | Sample 6 TiN Coating |
| 0 | 0 | 0 | 0 | 0 | 0 | 0 |
| 2.9 | 0.0073 | 0.0119 | 0.0021 | 0.0022 | 0.0027 | 0.0013 |
| 5.7 | 0.0112 | wear | 0.0027 | 0.0028 | 0.0034 | 0.0014 |
| 8.6 | wear | | 0.003 | 0.0034 | 0.0038 | 0.0017 |
| 11.4 | | | 0.0032 | 0.0039 | 0.0043 | 0.0018 |
| 14.2 | | | 0.0032 | 0.0042 | 0.0018 | 0.0019 |
| 17 | | | 0.0032 | 0.0049 | chipped out | 0.0021 |
| 19.8 | | | 0.0095 | 0.0053 | | 0.0023 |
| 22.6 | | | crater-break out | 0.0058 | | 0.0023 |
| 25.36 | | | | 0.0062 | | 0.0025 |
| 28 | | | | 0.0067 | | 0.0027 |
| 30.79 | | | | 0.0072 | | 0.0028 |
| 33.5 | | | | 0.0079 | | 0.0028 |
| 36.28 | | | | 0.0083 | | 0.0029 |
| 38.99 | | | | wear | | 0.0029 |
| 41.69 | | | | | | 0.003 |
| 44.37 | | | | | | 0.003 |
| 47.04 | | | | | | 0.0033 |
| 49.7 | | | | | | 0.0034 |
| 52.36 | | | | | | 0.0034 |
| 55.01 | | | | | | 0.0036 |
| 57.66 | | | | | | 0.0036 |
| 60.3 | | | | | | 0.0036 |
| 62.94 | | | | | | 0.0037 |
| 65.57 | | | | | | 0.0039 |
| 68.18 | | | | | | 0.004 |
| 79.78 | | | | | | 0.0044 |
| 73.37 | | | | | | 0.0044 |
| 76.95 | | | | | | 0.0044 |
| 78.59 | | | | | | 0.0044 |
| 81.23 | | | | | | 0.0045 |
| 83.86 | | | | | | 0.0109 |
| | | | | | | crater caused spall |

The above-tabulated results also are depicted graphically at Fig. 1. It will be observed that the low CBN product (Sample 4) provided superior cutting performance compared to the high CBN product (Samples 1). Coating of both types of CBN products with TiC coatings did not significantly alter such cutting performance (Samples 2 and 5). However, coating of the products with TiN resulted in an unexpected and substantial improvement in cutting performance for the lower CBN-containing product (Sample 6). The same TiN coating did result in an improvement in performance for the higher CBN-containing product (Sample 3); although such performance improvement pales at the improvement in the low CBN coated product (Sample 6). That is, Sample 6 displayed around a 2.5 fold improvement in tool life compared to all other samples tested. Truly, an unexpected result.

Subsequent analysis revealed that the CBN in Sample 3 had reacted with the workpiece to a much greater extent than in Sample 6; thus, explaining the superior results recorded for inventive Sample 6.

### EXAMPLE II

The tests reported in Example I were repeated on the same substrate under the same test conditions for the three low CBN samples tested in Example I (Samples 7-9). The following test results were recorded.

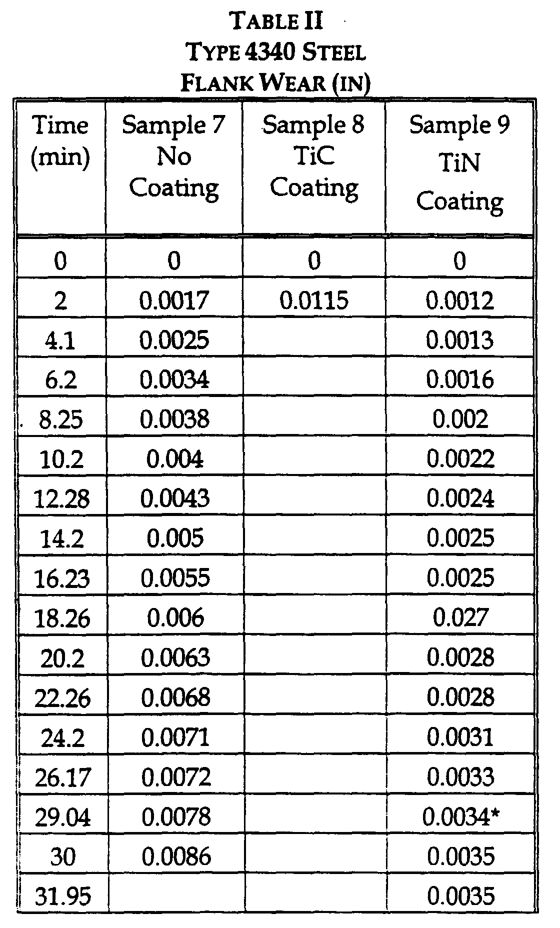

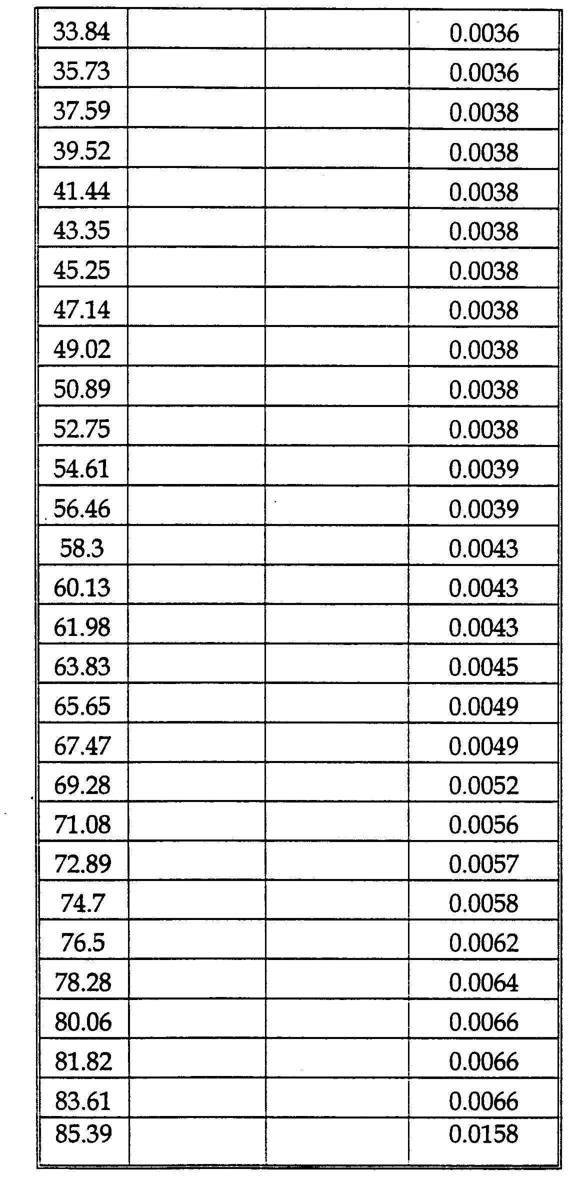

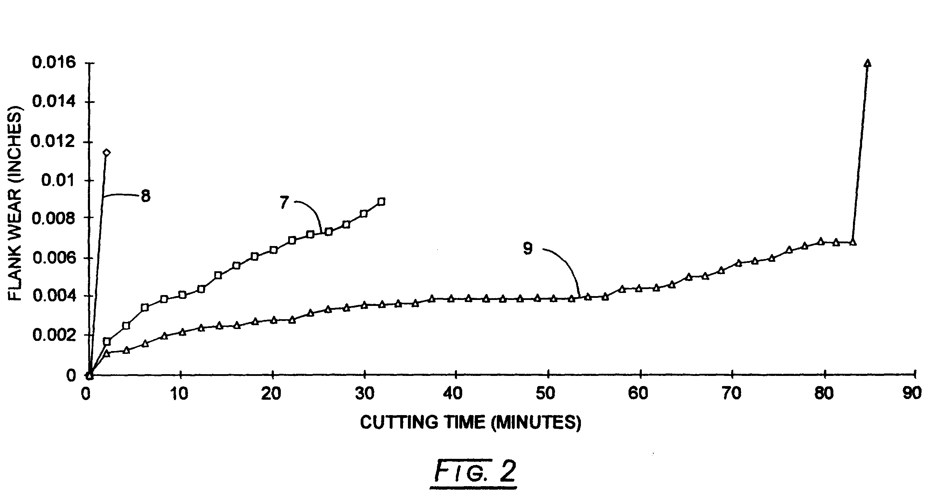

These results are depicted graphically at Fig. 2. Again, these results demonstrate the unexpected, yet dramatic improvement in cutting performance realized by coating lower content CBN tools coated with hard refractory materials, such as TiN.

### EXAMPLE III

The tests reported in Example I again were repeated with two samples per product type. The results recorded are set forth below.

**TABLE IIIA**

| **TYPE 4340 STEEL** **FLANK WEAR (IN)** | | | |
|---|---|---|---|
| Time (min) | Sample 10 | Sample 12 TiC Coating | Sample 14 TiN Coating |
| 0 | 0 | 0 | 0 |
| 2.9 | 0.0022 | 0.0027 | 0.0013 |
| 5.7 | 0.0028 | 0.0034 | 0.0014 |
| 8.6 | 0.0034 | 0.0038 | 0.0017 |
| 11.4 | 0.0039 | 0.0043 | 0.0018 |
| 14.2 | 0.0042 | 0.0118 | 0.0019 |
| 17 | 0.0049 | | 0.0021 |
| 19.8 | 0.0053 | | 0.0023 |
| 22.6 | 0.0058 | | 0.0024 |
| 25.3 | 0.0062 | | 0.0025 |
| 28 | 0.0067 | | 0.0027 |
| 30.7 | 0.0072 | | 0.0028 |
| 33.5 | 0.0077 | | 0.0028 |
| 36.2 | 0.0079 | | 0.0029 |
| 39 | 0.0083 | | 0.0029 |
| 41.6 | | | 0.003 |
| 44.3 | | | 0.003 |
| 47 | | | 0.0033 |
| 49.7 | | | 0.0034 |
| 52.3 | | | 0.0034 |
| 55 | | | 0.0036 |
| 57.6 | | | 0.0036 |
| 60.3 | | | 0.0036 |
| 62.9 | | | 0.0037 |
| 65.5 | | | 0.0039 |
| 68.1 | | | 0.004 |
| 70.7 | | | 0.0044 |
| 73.3 | | | 0.0044 |
| 75.9 | | | 0.0044 |
| 78.5 | | | 0.0044 |
| 81.2 | | | 0.0045 |
| 83.8 | | | 0.0109 |

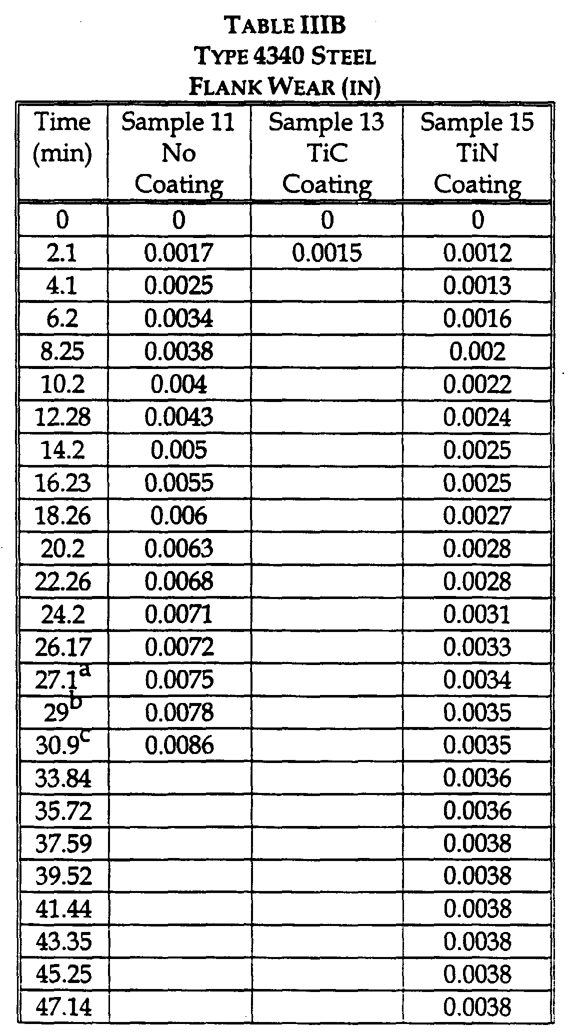

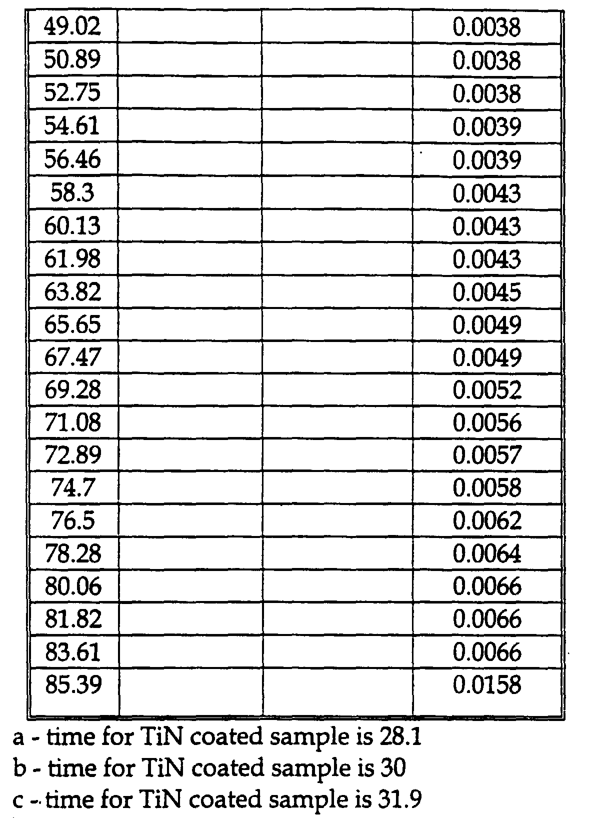

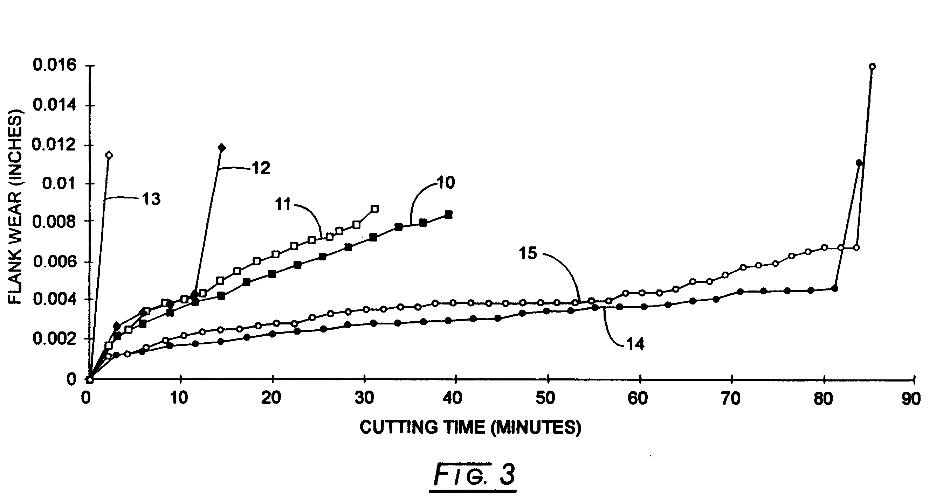

The results for both Tables IIIA and IIIB are depicted graphically at Fig. 3. Yet again, these results demonstrate the unexpected, yet dramatic improvement in cutting performance realized by coating lower content CBN tools coated with hard refractory materials, such as TiN.

### EXAMPLE IV

In this example, AISI-SAE grade 1045 steel (HRB 98), a soft steel, was machined under the following conditions: 1,200 SFM cutting speed, 0.010 IPR feed, 0.050 inches DOC, and dry cutting. Sample 16 was a Kennametal grade K090 ceramic (alumina and 30% TiC black composition used for machining carbon steels, alloy steels, tool steels, and stainless steels to 60 RC), while Sample 17 was the high CBN compact coated with TiN and Sample 18 was the inventive low CBN compact coated with TIN. The time/wear data was recorded for 10 minutes with the following data being recorded:

**TABLE IV**

| **TYPE 1045** **STEEL** **FLANK WEAR (IN)** | | | | | |
|---|---|---|---|---|---|
| Sample 16 No Coating | | Sample 17 TiN Coating | | Sample 18 TiN Coating | |
| Time (min) | Flank Wear | Time (min) | Flank Wear | Time (min) | Flank Wear |
| 1.37 | 0.0028 | 1.72 | 0.0016 | 1.55 | 0.0020 |
| 2.72 | 0.0037 | 3.42 | 0.0016 | 3.08 | 0.0022 |
| 4.05 | 0.0047 | 5.10 | 0.0018 | 4.58 | 0.0027 |
| 5.36 | 0.0057 | 6.76 | 0.0019 | 6.06 | 0.0029 |
| 6.65 | 0.0060 | 8.40 | 0.0019 | 7.52 | 0.0029 |
| 7.92 | 0.0071 | 10.02 | 0.0024 | 8.96 | 0.0031 |
| 9.16 | 0.0079 | 11.61 | 0.0037 | 10.38 | 0.0032 |
| 10.38 | 0.0079 | 13.18 | 0.0045 | 11.78 | 0.0036 |

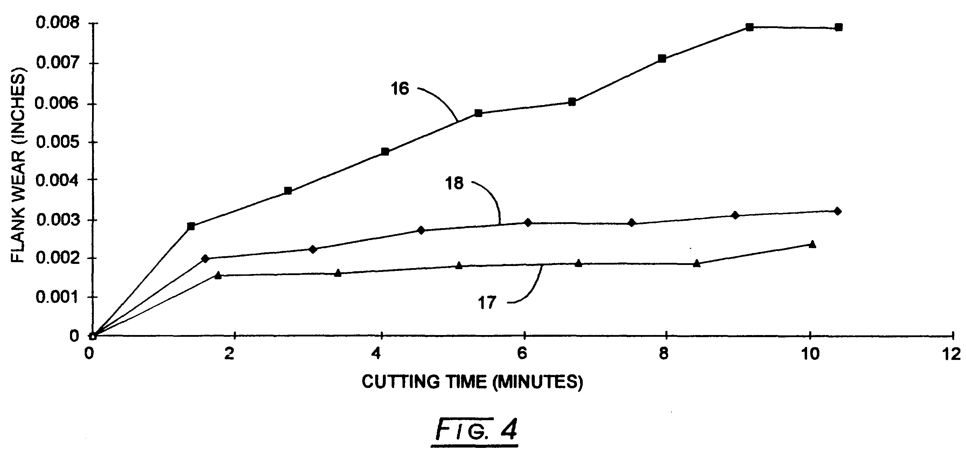

The above-tabulated results are depicted graphically at Fig. 4. These results demonstrate that conventional cutting tools or elements for soft steel now can include the inventive coated low CBN-containing compacts which, without the coating, are unsuited to cutting of soft steel. Yet, another unexpected result of the present invention.

### EXAMPLE V

The tests reported in Example IV were repeated at an increased cutting speed of 1,600 SFM with the following results being reported

**TABLE V**

| **TYPE 1045** **STEEL** **FLANK WEAR (IN)** | | | | | |
|---|---|---|---|---|---|
| Sample 16 No Coating | | Sample 17 TiN Coating | | Sample 18 TiN Coating | |
| Time (min) | Flank Wear | Time (min) | Flank Wear | Time (min) | Flank Wear |
| 0.77 | 0.0024 | 0.90 | 0.0014 | 0.85 | 0.0028 |
| 1.52 | 0.0043 | 1.78 | 0.0024 | 1.68 | 0.0034 |
| 2.26 | 0.0045 | 2.65 | 0.0107^{a} | 2.50 | 0.0043 |
| 2.98 | 0.0052 | | | 3.30 | 0.0066 |
| 3.68 | 0.0121^{b} | | | 4.09 | 0.0112^{a} |

| | | | | | |
|---|---|---|---|---|---|
| a - wore through coating | | | | | |
| b - chipped out | | | | | |

These results again demonstrate that, not only do the inventive coated low content CBN compacts effectively machine soft steels, but also provide longer machining times that a conventional alumina/TiC tool and a coated high-content CBN compact.

## Claims

1. A cutting tool comprising a polycrystalline cubic boron nitride (CBN) cutting tool containing less than 70 volume-% CBN and being coated with a layer of hard refractory material which:
(a) forms a stable chemical bond with CBN,
(b) is inert to ferrous metals,
(c) will not promote back-conversion of CBN, and
(d) will form a continuous coating on CBN under conditions which are not detrimental to CBN.

2. The cutting tool of claim 1, wherein said hard refractory material is one or more of a boride, carbide, nitride, or silicide of a transition metal, mixtures or alloys thereof.

3. The cutting tool of claim 2, wherein said hard refractory material is one or more of a boride of Ti, Zr, V, Ta, Cr; a carbide of Zr, Ti, V; a nitride of Cr, Ta, Ti, Si, Al; and a silicide of Mo.

4. The cutting tool of claim 3, wherein said hard refractory material is TiN.

5. The cutting tool of claim 1, wherein said layer of said hard refractory material is at least about 0.25 microns in thickness.

6. The cutting tool of claim 5, wherein said layer ranges in thickness from between about 0.25 and 30 microns.

7. The cutting tool of claim 6, wherein said layer ranges in thickness from between about 1 and 12 microns.

8. The cutting tool of claim 1, wherein said layer of said hard refractory material was applied by a technique selected from chemical vapor deposition, plasma activated vapor deposition, sputtering techniques, and vacuum plating.

9. The cutting tool of claim 1, wherein the CBN content of said cutting tool ranges from between about 30 volume-% up to 70 volume-%.

10. A method for improving the cutting performance of a polycrystalline cubic boron nitride (CBN) cutting tool used in cutting ferrous materials, which comprises the steps of:
(a) restricting the CBN cutting tool to contain less than 70 volume-% CBN; and
(b) coating said CBN cutting tool with a layer of hard refractory material which:
(1) forms a stable chemical bond with CBN,
(2) is inert to ferrous metals,
(3) will not promote back-conversion of CBN, and
(4) will form a continuous coating on CBN under conditions which are not detrimental to CBN.
